# EUROPÄISCHE PATENTSCHRIFT

(11) **EP 2 313 348 B1**
(45) Veröffentlichungstag und Bekanntmachung des Hinweises auf die Patenterteilung: **10.04.2013**
(21) Anmeldenummer: 09780130.2
(22) Anmeldetag: 03.07.2009
(51) Int. Cl.: C02F 1/461, C02F 9/00

(54) **VERFAHREN ZUR KONDITIONIERUNG EINER BEI DER NASSCHEMISCHEN REINIGUNG KONVENTIONELLER ODER NUKLEARTECHNISCHER ANLAGEN ANFALLENDEN, ORGANISCHE SUBSTANZEN UND METALLE IN IONISCHER FORM ENTHALTENDEN ABFALLLÖSUNG**
METHOD FOR CONDITIONING A PRECIPITATING SOLUTION THAT ARISES DURING THE WET-CHEMICAL CLEANING OF CONVENTIONAL OR NUCLEAR PLANTS, SAID SOLUTION CONTAINING ORGANIC SUBSTANCES AND METALS IN IONIC FORM
PROCÉDÉ DE CONDITIONNEMENT D'UNE SOLUTION DE DÉCHETS PRODUITE LORS DU NETTOYAGE CHIMIQUE PAR VOIE HUMIDE D'INSTALLATIONS NUCLÉAIRES OU CLASSIQUES, ET CONTENANT DES SUBSTANCES ORGANIQUES ET DES MÉTAUX SOUS FORME IONIQUE

(30) Priorität: 07.07.2008 DE 102008040224; 24.09.2008 DE 102008048691
(43) Veröffentlichungstag der Anmeldung: 27.04.2011
(73) Patentinhaber: AREVA GmbH, 91052 Erlangen (DE)
(72) Erfinder: TOPF, Christian, 91301 Forchheim (DE); SCHUß, Silvia, 94351 Feldkirchen (DE); AMMANN, Franz, 91056 Erlangen (DE)
(74) Vertreter: Meissner, Bolte & Partner
(86) Internationale Anmeldenummer: PCT/EP2009/058407
(87) Internationale Veröffentlichungsnummer: WO 2010/003895

(56) Entgegenhaltungen:
- EP-A- 0 861 807
- US-A- 5 531 865

## Beschreibung

Die Erfindung betrifft ein Verfahren zur Konditionierung einer bei der nasschemischen Reinigung konventioneller oder nukleartechnischer Anlagen anfallenden, organische Substanzen und Metalle in ionischer Form enthaltenden Abfalllösung. Solche Lösungen fallen an, wenn beispielsweise bei der sekundärseitigen Reinigung von Dampferzeugern von Kernkraftwerken Magnetit enthaltende Ablagerungen entfernt werden. Zu diesem Zweck werden Reinigungslösungen eingesetzt, die beispielsweise wenigstens ein organisches, mit Metallionen wie Fe-II und/oder Fe-III einen wasserlöslichen Komplex bildendes Agens, beispielsweise eine organische Säure wie EDTA enthalten. Nach Abschluss der Reinigung liegen Abfalllösungen vor, welche die erwähnten Komplexverbindungen sowie gegebenenfalls unverbrauchtes organisches Agens enthält. Daneben können auch noch andere organische Verbindungen wie Amine und anorganische Verbindungen, beispielsweise Nitrat- und Ammoniumionen, enthalten sein. Als Maß für den Gehalt an organischen Substanzen wird üblicherweise der CSB-Wert herangezogen. Er gibt den chemischen Sauerstoffbedarf an, der zum Abbau der organischen Substanzen zu CO₂ und Wasser erforderlich ist.

Derartige Abfalllösungen bedürfen schon allein wegen eines meist hohen Metallgehaltes und CSB-Wertes einer umweltschonenden Entsorgung. Im Falle nicht radioaktiv kontaminierter Lösungen lassen manche Länder, z.B. Deutschland, eine Entsorgung durch Verbrennung als Sondermüll zu. Wenn die Abfalllösung radioaktiv kontaminiert ist, was beispielsweise bei der Reinigung der Dampferzeuger von Kernkraftwerken der Fall sein kann, oder eine Verbrennung auch bei nicht radioaktiven Abfalllösungen nicht zugelassen ist, kommt eine derartige Vorgehensweise nicht in Frage. Bei einem gängigen Konditionierungsverfahren werden die organischen Bestandteile elektrochemisch bzw. elektrolytisch mit Hilfe geeigneter Elektroden idealer Weise vollständig zu Kohlendioxid und Wasser zersetzt. Zur Entfernung der Metallionen aus der Lösung wird diese über Ionentauscher geleitet. Dabei fallen erhebliche Mengen an beladenen, gegebenenfalls radioaktiv kontaminierten Austauscherharzen als Sekundärabfall an, die in äußerst kostenintensiver Weise zwischen- oder endgelagert werden müssen. Bei mit Metallen beladenen Austauscherharzen ist das Volumenverhältnis zwischen dem Austauscherharz und dem Volumen bzw. der Masse an Metallionen äußerst ungünstig.

Davon ausgehend ist es die Aufgabe der Erfindung, ein Verfahren vorzuschlagen, mit dem eine Abfalllösung der eingangs genannten Art auf einfache und wirtschaftliche Weise konditionierbar ist.

Diese Aufgabe wird durch ein Verfahren nach Anspruch 1 und ein Verfahren nach Anspruch 4 gelöst. Bei dem zuerst genannten Verfahren wird zumindest ein Teil der organischen Substanzen durch elektrochemische Behandlung der Abfalllösung abgebaut und das wenigstens eine Metall durch Zugabe von Phosphorsäure ausgefällt und der entstandene Phosphat-Niederschlag aus der Abfalllösung entfernt. Das in Anspruch 4 angegebene Verfahren unterscheidet sich davon dadurch, dass die in der Abfalllösung enthaltenen Metalle nicht durch eine elektrochemische, sondern durch eine Behandlung mit UV-Licht abgebaut werden.

Aufgrund der elektrochemischen Behandlung oder der Bestrahlung mit UV-Licht werden organische Verbindungen letztlich zu CO₂ und Wasser zersetzt. Metall-Komplexverbindungen geben diese erst im Zuge ihrer Zersetzung die von ihnen komplex gebundenen Metallionen frei. Bei beiden Verfahrensvarianten ist es zweckmäßig, in saurer bis schwach basischer Lösung, also in einem pH-Bereich von etwa 3 bis 9 zu arbeiten, weil dadurch die Bildung von Metallhydroxid-Niederschlägen verhindert oder verringert wird. Solche im alkalischen Bereich entstehenden Niederschläge sedimentieren sehr langsam und lassen sich nur sehr schwer abtrennen, beispielsweise abfiltrieren. Ganz anders dagegen verhalten sich Phosphat-Niederschläge. Diese sind wenig voluminös und lassen sich mit geringem apparatetechnischen Aufwand problemlos beispielsweise durch Filtrieren oder Zentrifugieren abtrennen. Im Gegensatz zu einer Abtrennung mit Ionentauscher fällt bei diesem Verfahren ein deutlich geringeres Abfallvolumen an.

Die zur Ausfällung des Metalls verwendete Phosphorsäure hat weiterhin den Vorteil, dass sie gleichzeitig zur Einstellung des genannten pH-Wert-Bereiches (pH von ca. 3 bis 9) dienen kann und vor allem, da es sich um eine Oxosäure handelt, eine Beschleunigung des Abbaus der organischen Verbindungen bewirkt. Aus einer Oxosäure bzw. dem entsprechenden Säurerest (Phosphat) bilden sich an der Anode Peroxoverbindungen (Peroxophospate), die als sehr starke Oxidationsmittel die oxidative Zersetzung der organischen Substanzen zu Kohlendioxid und Wasser beschleunigen. Die erfindungsgemäß verwendete Phosporsäure, die mit vielen Metallen wie Eisen, Kobalt oder Nickel schwerlösliche Niederschläge bildet, gewährleistet somit einerseits ein problemloses Abtrennen von vielen Metallen, insbesondere von Eisen, aus der Abfalllösung und andererseits eine Beschleunigung des Abbauprozesses.

Bei der an sich bekannten elektrochemischen Zersetzung von organischen Substanzen in wässriger Lösung wurden Oxosäuren, beispielsweise Schwefelsäure, lediglich im Hinblick auf eine Abbaubeschleunigung eingesetzt. Eine Fällungsreaktion war dabei nicht vorgesehen. Aufgrund der sehr schnellen Reaktion zwischen den Metallionen und den Phosphationen sowie der schnell vonstatten gehenden Niederschlagsbildung werden, wie weiter unten noch näher erläutert wird, Trübungen und sonstige nachteilige Effekte zumindest verringert.

Im Falle der UV-Variante des Verfahrens wird ein starkes Oxidationsmittel wie Wasserstoffperoxid zur Abbaubeschleunigung zugesetzt.

Bei beiden Verfahrensvarianten ist es denkbar, zunächst den Abbau der in der Abfalllösung enthaltenen organischen Substanzen bis zu dem gewünschten Ausmaß durchzuführen und anschließend durch Zugabe von Phosphorsäure das Ausfällen von Metallen vorzunehmen. Im Falle beider Verfahrensvarianten ist es jedoch vorteilhaft, mit der Ausfällung schon vorher zu beginnen und zwar insbesondere schon von Beginn an, d.h. zu einem Zeitpunkt, zu dem die organischen Inhaltsstoffe noch nicht vollständig bzw. in dem gewünschten Ausmaß zerstört sind. Bei beiden Verfahrensvarianten wird dadurch die Effektivität des Verfahrens gesteigert, wie weiter unten noch näher erläutert wird.

Die praktische Durchführung des Verfahrens ist mit einem relativ geringen technischen Aufwand möglich. Die zu behandelnde Abfalllösung wird in einem geeigneten Behälter elektrolysiert oder mit UV-Licht bestrahlt, bis die organischen Substanzen auf eine tolerierbare Restmenge oder vollständig abgebaut sind. Im Falle einer elektrolytischen Behandlung wird zumindest als Anode eine Diamantelektrode verwendet, um eine gegebenenfalls störende Bildung von Sauerstoff zu unterdrücken und die Entstehung von stark oxidierend wirkenden Peroxoverbindungen (aus Oxoverbindungen, insbesondere aus Phosphorsäure) zu ermöglichen. Wird als Abfalllösung eine verbrauchte Reinigungslösung behandelt, die zur Reinigung des Dampferzeugers eines Kernkraftwerks verwendet wurde, so enthält diese große Mengen an Eisen, das aus Magnetitablagerungen des Dampferzeugers stammt. Zur Auflösung dieser Ablagerung enthält die Reinigungslösung einen organischen Komplexbildner wie EDTA. Um bei der Reinigung einen Angriff auf den metallischen Werkstoff des Dampferzeugers, in der Regel Stahl, zu verhindern, wird in alkalischem Milieu gearbeitet, d.h. die Reinigungslösung enthält ein Alkalisierungsmittel wie Ammoniak bzw. Ammoniumionen oder Morpholin. Außerdem enthält die Reinigungslösung ein Reduktionsmittel wie Hydrazin, um einen oxidativen Angriff auf das Material des Dampferzeugers zu verhindern. Nach der Reinigung ist das hauptsächlich in zweiwertiger Form vorliegende Eisen komplex, z.B. als EDTA-Komplex, gelöst. Neben Eisen können in einer derartigen Abfalllösung auch andere Metalle wie Kobalt oder Nickel in geringeren Mengen vorhanden sein. Darunter können auch Radionuklide sein, die über kleine Leckagen auf die Sekundärseite des Dampferzeugers gelangt sind. Bei der Reinigung eines Dampferzeugers fallen große Mengen an verbrauchter Reinigungslösung etwa im Bereich von einigen Hundert Kubikmetern, beispielsweise 250 m³, an. Um derartige Mengen an Abfalllösung mit vertretbarem Zeitaufwand behandeln zu können, werden plattenförmige Elektroden aus einem porigen Material eingesetzt. Die Elektrodenplatten weisen dabei eine Fläche beispielsweise von 28 m² bis 40 m² auf. Die Elektrodenplatten bzw. deren äußere und auch innere Oberfläche ist mit einer dünnen Diamantschicht versehen. Die Dauer des Verfahrens hängt von der jeweiligen Belastung der Abfalllösung mit organischen Substanzen, von der Elektrodenfläche und von der Stromdichte ab.

In einer Abfalllösung der genannten Art wird ein pH-Wert eingestellt, bei dem ein Ausfällen eines Metallhydroxids verhindert oder zumindest verringert ist. Dies ist bei einem pH-Wert etwa von 3 bis 9 der Fall. Daneben, dass Hydroxidniederschläge schwer aus der Abfalllösung abtrennbar sind haben sie den weiteren Nachteil, dass sie sich auf Elektrodenflächen und UV-Strahlern absetzen und deren Funktion beeinträchtigen. Ein Arbeiten in saurer Lösung ist bevorzugt, weil die Bildung von schwer filtrierbaren Metallhydroxid-Niederschlägen zuverlässig verhindert werden kann. Weiterhin wird der Lösung Phosphorsäure zugesetzt, und zwar in einer Menge, die ausreicht, um die in der Lösung enthaltenen Metalle, also hauptsächlich Eisen, auszufällen. Es werden dabei vorzugsweise stöchiometrische Mengen an Phosphorsäure eingesetzt, da ein Überschuss keinen Effekt auf die Fällung hat und nur den Sekundärabfall erhöhen würde. Für ein Mol Eisen, das einer Masse von 55,85 g entspricht, ist ein Mol bzw. 98 g Phosphorsäure erforderlich. Die zugesetzte Phophorsäure bewirkt bereits eine Ansäuerung der Lösung, so dass zusätzliche Maßnahmen zur pH-Wert-Einstellung meist nicht erforderlich sind. Während der Elektrolyse oder UV-Bestrahlung werden sämtliche organischen Bestandteile, darunter auch Komplexbildner, beispielsweise EDTA zu Kohlendioxid und Wasser zersetzt. Das Eisen, das beispielsweise mit einem Gehalt im Bereich von 5g/l bis 40g/l vorliegt, wird dabei frei, so dass es sich mit den Phosphatresten der Phosphorsäure zu schwerlöslichem Eisenphospat verbinden kann, das sich als Niederschlag am Boden des Behälters ansammelt. Eisenphosphat und auch die schwerlöslichen Phosphate anderer Metalle sedimentieren schnell und lassen sich problemlos von der Lösung abtrennen, vorzugsweise durch Filtration oder auch durch Zentrifugieren. Dadurch wird aus der Abfalllösung praktisch der gesamte Metallgehalt inklusive eventuell vorhandener Radionuklide entfernt. Die verbleibende Lösung enthält dann allenfalls nur noch Reste an nicht vollständig zersetzten organischen Verbindungen und Verunreinigungen, kann somit auf konventionelle Weise, beispielsweise durch Verdampfen oder Verbrennen, entsorgt werden. Die abgetrennten Phosphate können als Sondermüll einer entsprechenden Entsorgungsmaßnahme zugeführt werden. Für den Fall einer radioaktiven Kontamination werden sie, gegebenenfalls nach Einbindung in eine feste Bindemittelmatrix, in ein entsprechendes End- oder Zwischenlager verbracht.

Die in Rede stehende Zugabe von Phosphorsäure kann prinzipiell zu einem beliebigen Zeitpunkt des Verfahrens vorgenommen werden. Es hat sich jedoch überraschenderweise gezeigt, dass das Verfahren effektiver arbeitet, wenn bereits von Beginn an, also während der elektrochemischen Behandlung, Phosphorsäure vorhanden ist bzw. zugesetzt wird. Während der Aufarbeitung von Abfalllösungen wurde Phosphorsäure zu Beginn und in einem Fall gegen Ende des Verfahrens zugesetzt. Die Abfalllösungen enthielten vergleichbare Mengen an unverbrauchter EDTA, Morpholin, Hydrazin und Eisen. Der Gesamtgehalt an organischen Substanzen entsprach einem chemischen Sauerstoffbedarf bzw. CSB-Wert von 320000 mg O₂/l bis 370000 mg O₂/l. Die Abfalllösungen wurden jeweils mit plattenförmigen, eine geometrische Fläche von ca. 30 m² aufweisenden Diamantelektroden der oben beschriebenen Art behandelt. Während der Behandlung wurden in bestimmten Zeitabständen der Eisengehalt und die jeweils zugeführte spezifische Ladung bestimmt. In dem unten stehenden Diagramm ist der Eisengehalt über der spezifischen Ladung aufgetragen. Es ist erkennbar, dass in den Fällen mit einer anfänglichen Zugabe der Phosphorsäure in einer hinsichtlich des Eisengehalts stöchiometrischen Menge bei einer Gesamtladungsmenge von 1500 Ah/l der anfängliche Eisengehalt von 1100 mg/l bzw. 1300 mg/l auf Werte unter 10 mg/l absank (siehe im Diagramm jeweils die Kurven mit dreieckigen und runden Messpunkten). Wurde dagegen erst gegen Ende des Verfahrens, d.h. bei einer zugeführten Ladungsmenge von ca. 1500 Ah/l Phosphorsäure (ebenfalls mit einer gegenüber dem Eisengehalt stöchiometrischen Menge) zugesetzt, zeigte es sich, dass nach der Phosphatfällung ein wesentlich höherer Restgehalt an Eisen, ein Gehalt von etwa 110 mg/l, in der Abfalllösung verblieb (siehe im Diagramm die Kurve mit quadratischen Messpunkten). Ist Phosphorsäure gleich zu Beginn vorhanden, wird freies Eisen sofort gebunden und als Eisenphosphat ausgefällt. Es sinkt relativ schnell zum Boden des Reaktionsbehälters ab, so dass die Gefahr einer Ablagerung auf den Elektrodenoberflächen sehr gering ist. Bei Abwesenheit von Phosphorsäure dagegen bilden sich Eisenhaltige Ablagerungen auf den Elektroden, die die Effizienz der Elektrode und der Fällung nachteilig beeinflussen.

Die Zersetzung organischer Inhaltsstoffe einer Abfalllösung kann auch anstelle oder zusätzlich zu einer elektrochemischen Behandlung durch UV-Bestrahlung vorgenommen werden. Durch die UV-Bestrahlung in Kombination mit einem Oxidationsmittel wie Wasserstoffperoxid werden ebenfalls organische Substanzen im Wesentlichen zu Kohlendioxid und Wasser abgebaut. Dabei werden komplex gebundene Metalle freigesetzt werden, so dass sie auf die oben geschilderte Weise ausgefällt und abgetrennt werden können.

Im Falle einer Abwasserbehandlung mit Hilfe von UV-Strahlung ist eine anfängliche Zugabe von Phosphorsäure ebenfalls vorteilhaft, insbesondere im Hinblick auf den zuletzt genannten Effekt der Belegung der Reaktionsfläche der UV-Lampen mit Eisenhaltigen Ablagerungen. Es wurde beobachtet, dass es bei der UV-Bestrahlung ohne Anwesenheit von Phosphorsäure, oder wenn diese erst zu einem späteren Zeitpunkt zugesetzt wurde, zu einer Trübung der Lösung kam, die zu einer Reduzierung der UV-Ausbeute führt.

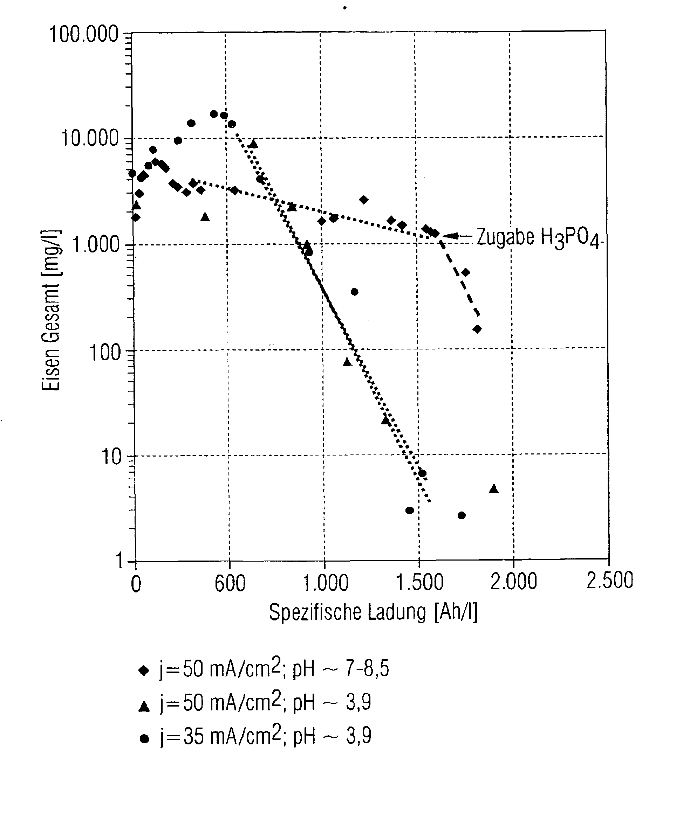

## Patentansprüche

1. Verfahren zur Konditionierung einer bei der nasschemischen Reinigung konventioneller oder nukleartechnischer Anlagen anfallenden, wenigstens eine organische Substanz und wenigstens ein Metall in ionischer Form enthaltenden Abfalllösung, bei dem zumindest ein Teil der organischen Substanz durch elektrochemische Behandlung der Abfalllösung abgebaut wird und wenigstens ein Metall durch Zugabe von Phosphorsäure ausgefällt und der entstandene Phosphat-Niederschlag aus der Abfalllösung entfernt wird.

2. Verfahren nach Anspruch 1, bei dem zur elektrochemischen Behandlung eine Anode mit einer Sauerstoffüberspannung verwendet wird.

3. Verfahren nach Anspruch 1 oder 2, bei dem in der Abfalllösung neben der Phosphorsäure eine weitere Oxoverbindung enthalten ist.

4. Verfahren zur Konditionierung einer bei der nasschemischen Reinigung konventioneller oder nukleartechnischer Anlagen anfallenden, wenigstens eine organische Substanz und wenigstens ein Metall in ionischer Form enthaltenden Abfalllösung, bei dem zumindest ein Teil der organischen Substanz durch Bestrahlung der Abfalllösung mit UV-Licht abgebaut wird und wenigstens ein Metall durch Zugabe von Phosphorsäure ausgefällt und der entstandene Phosphat-Niederschlag aus der Abfalllösung entfernt wird.

5. Verfahren nach einem der vorhergehenden Ansprüche, bei dem ein gegenüber der wenigstens einen organischen Substanz wirksames Oxidationsmittel in der Abfalllösung zugesetzt wird.

6. Verfahren nach Anspruch 5, bei dem der Abfalllösung Wasserstoffperoxid als Oxidationsmittel zugesetzt wird.

7. Verfahren nach einem der vorhergehenden Ansprüche, bei dem die Phosphorsäure zu einem Zeitpunkt zugegeben wird, zu dem die wenigstens eine organische Substanz noch nicht vollständig abgebaut ist.

8. Verfahren nach Anspruch 7, bei dem die Phosphorsäure von Anfang an zugesetzt wird.

9. Verfahren nach einem der vorhergehenden Ansprüche, bei dem die Phosphorsäure in einer hinsichtlich des Metallgehaltes stöchiometrischen Menge zugesetzt wird.

10. Verfahren nach einem der vorhergehenden Ansprüche, bei dem in der Abfalllösung ein pH-Wert von 3 bis 9 eingestellt wird.

11. Verfahren nach einem der vorhergehenden Ansprüche, welches zur Behandlung von Eisen enthaltenden Abfalllösungen verwendet wird.

12. Verfahren nach einem der vorhergehenden Ansprüche, welches zur Konditionierung einer Abfalllösung verwendet wird, die eine organische Komplexverbindung eines Metalls enthält.

## Claims

1. Method for conditioning a precipitating solution arising during the wet-chemical cleaning of conventional or nuclear plants, containing at least one organic substance and at least one metal in ionic form, wherein at least one portion of the organic substance is degraded by electrochemical treatment of the precipitating solution and at least one metal is precipitated by adding phosphoric acid and the resulting phosphate precipitate is removed from the precipitate solution.

2. Method according to claim 1, wherein an anode having an oxygen over-potential is used for the electrochemical treatment.

3. Method according to claim 1 or 2, wherein a further oxo-compound is contained in the precipitating solution as well as phosphoric acid.

4. Method for conditioning a precipitating solution arising during the wet-chemical cleaning of conventional or nuclear plants, containing at least one organic substance and at least one metal in ionic form, wherein at least one portion of the organic substance is degraded by irradiating the precipitating solution with UV light and at least one metal is precipitated by adding phosphoric acid and the resulting phosphate precipitate is removed from the precipitate solution.

5. Method according to one of the preceding claims, wherein an active oxidation agent is added to the precipitating solution with respect to the at least one organic substance.

6. Method according to claim 5, wherein hydrogen peroxide is added to the precipitating solution as an oxidising agent.

7. Method according to one of the preceding claims, wherein the phosphoric acid is added at a time at which the at least one organic substance has not yet been completely degraded.

8. Method according to claim 7, wherein the phosphoric acid is added at the start.

9. Method according to one of the preceding claims, wherein the phosphoric acid is added in a stoichiometric amount with respect to the metal content.

10. Method according to one of the preceding claims, wherein a pH value of 3 to 9 is set in the precipitating solution.

11. Method according to one of the preceding claims, which is used to treat precipitating solutions containing iron.

12. Method according to one of the preceding claims, which is used to condition a precipitating solution containing an organic complex of a metal.

## Revendications

1. Procédé de conditionnement d'une solution de déchets produite lors du nettoyage chimique par voie humide d'installations nucléaires ou classiques, contenant au moins une substance organique et au moins un métal sous forme ionique, dans lequel au moins une partie de la substance organique est décomposée par traitement électrochimique de la solution de déchets et au moins un métal est éliminé par ajout d'acide phosphorique et la précipitation de phosphate qui en résulte est séparée de la solution de déchets.

2. Procédé selon la revendication 1, dans lequel une anode avec une surtension d'oxygène est utilisée pour le traitement électrochimique.

3. Procédé selon les revendications 1 ou 2, dans lequel un composé oxo est contenu dans la solution de déchets en plus de l'acide phosphorique.

4. Procédé de conditionnement d'une solution de déchets produite lors du nettoyage chimique par voie humide d'installations nucléaires ou classiques, contenant au moins une substance organique et au moins un métal sous forme ionique, dans lequel au moins une partie de la substance organique est décomposée par irradiation de la solution de déchets avec une lumière UV et au moins un métal est éliminé par ajout d'acide phosphorique et la précipitation de phosphate qui en résulte est séparée de la solution de déchets.

5. Procédé selon une des revendications précédentes, dans lequel un moyen d'oxydation actif par rapport à au moins une substance organique est ajouté dans la solution de déchets.

6. Procédé selon la revendication 5, dans lequel du peroxyde d'oxygène est ajouté à la solution de déchets comme moyen oxydant.

7. Procédé selon une des revendications précédentes, dans lequel l'acide phosphorique est ajouté à un moment, auquel au moins une substance organique n'est pas encore complètement décomposée.

8. Procédé selon la revendication 7, dans lequel l'acide phosphorique est ajouté au début.

9. Procédé selon une des revendications précédentes, dans lequel l'acide phosphorique est ajouté dans une quantité stoechiométrique en ce qui concerne la teneur en métal.

10. Procédé selon une des revendications précédentes, dans lequel dans la solution de déchets une valeur de pH de 3 à 9 est réglée.

11. Procédé selon une des revendications précédentes, qui est employé pour le traitement de solutions de déchets contenant du fer.

12. Procédé selon une des revendications précédentes, qui est employé pour le conditionnement d'une solution de déchets, qui contient une liaison complexe organique d'un métal.
